Europäisches Patentamt

(19) European Patent Office

Office européen des brevets

(11) Publication number: **0 069 297**
**A1**

## (12) EUROPEAN PATENT APPLICATION

(21) Application number: **82105605.8**

(22) Date of filing: **25.06.82**

(51) Int. Cl.³: **C 08 L 67/02**

(30) Priority: **08.07.81 US 281373**

(43) Date of publication of application:
**12.01.83 Bulletin 83/2**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Dieck, Ronald Lee**
**881 Rubis Drive**
**Sunnyvale California(US)**

(72) Inventor: **Fick, Randolph Karl**
**207 Glenview Drive**
**Evansville Indiana 47710(US)**

(74) Representative: **Schüler, Horst, Dr. European Patent**
**Attorney et al,**
**Kaiserstrasse 41**
**D-6000 Frankfurt/Main 1(DE)**

(54) Melt viscosity control in flame retarded polybutylene terephthalate.

(57) There is provided flame retarded polybutylene terephthalate compositions of controlled melt viscosity and a process for preparing such compositions, particularly polybutylene terephthalate compositions which are flame retarded with a flame retardant comprising a brominated aromatic polycarbonate, such as an aromatic polycarbonate containing units of bisphenol-A. The process comprises adding to the flame retarded polybutylene terephthalate during extrusion compounding trace amounts of an aliphatic diol, particularly 1,4-butanediol. Such addition results in lowering the melt viscosity of the flame retarded polybutylene terephthalate compositions, and in novel flame retarded polybutylene terephthalate compositions of controlled melt viscosity.

EP 0 069 297 A1

## Melt Viscosity Control in Flame Retarded Polybutylene Terephthalate

This invention relates to a process for controlling or lowering the melt viscosity of flame retarded polybutylene terephthalate (PBT) (which is also referred to as polytetramethylene terephthalate (PTMT)), and the resultant novel compositions. More particularly the process comprises adding to compositions comprising polybutylene terephthalate and a flame retarding agent comprising a brominated aromatic polycarbonate, during extrusion compounding of said compositions, preferably an aromatic polycarbonate containing units of tetrabromobisphenol A, trace amounts of an aliphatic diol, sufficient to lower the melt viscosity of the flame retarded PBT. The melt viscosity of the flame retarded PBT can be controlled by varying the amount of the aliphatic diol which is added to the composition of the blend comprising PBT and the flame retardant agent. With smaller amounts the melt viscosity is lowered to a lesser degree while with larger amounts of the aliphatic diol the melt viscosity is lowered to a greater degree. A particularly effective aliphatic diol for this purpose is 1,4-butanediol. It has been found that trace amounts of this diol ranging from about 0.01% to about 0.50% by weight are highly effective to lower the melt viscosity of the flame retarded PBT.

<u>Background of the Invention.</u> - Flame retarded polybutylene terephthalate compositions which include as flame retardant agents brominated polycarbonate resins or polymeric and oligomeric flame retarding agents comprising an aromatic polycarbonate containing units of bisphenol-A are known, as see Kamada <u>et</u> <u>al.</u>, U.S. Patent No. 4,035,333 and Baron <u>et</u> <u>al.</u>, U.S. Patent 4,044,073, which patents are incorporated herein by reference. However, flame retarded PBT compositions which employ such flame retardant agents usually suffer from the drawback of high melt viscosity. This makes the compositions difficult to mold, particularly when molding small parts are involved, since they require the use of high extrusion temperatures to mold the parts.

It has now been discovered that this drawback can readily be overcome by adding, during extrusion compounding of the flame retarded PBT compositions, a small amount of an aliphatic diol, and intimately admixing the aforesaid components. It has been found that even admixing trace amounts, namely as little as about 0.01% to about 0.50% by weight of the aliphatic diol, is effective to lower the melting viscosity of the flame retarded PBT. Thus, the addition of the diol permits control of the melt viscosity, by regulating the amount of the aliphatic diol added in accordance with the desired degree of lowering the melt viscosity.

<u>Description of the Invention.</u> - According to this invention there are provided flame retarded polybutylene terephthalate (PBT) compositions the melt viscosity of which is controlled by the inclusion therein of trace amounts of an aliphatic diol which lowers the melt viscosity. There is also provided a process for preparing such melt viscosity controlled compositions which involves intimately admixing the flame retarded PBT compositions with the appropriate amount of the aliphatic diol during extrusion compounding to give the desired degree of lowering or decreasing the melt viscosity. The preferred aliphatic diol is 1,4-butanediol.

The resulting compositions are useful for molding, e.g., injection molding, compression molding, transfer molding, and the like.

The polybutylene terephthalate employed in this invention is available commercially or can be prepared by known techniques such as by the alcoholysis of esters of terephthalic acid with butanediol and subsequent polymerization, by heating butanediol with the free terephthalalic acid or with halide derivatives thereof, and similar processes. These are described in Whinfield et al., U.S. Patent No. 2,465,319, and Pengilly, U.S. Patent 3,047,539. Commercial grades of polybutylene terephthalate are available under the trademark VALOX, as for example VALOX 310, and VALOX 315.

The flame retardant agents are brominated aromatic polycarbonates, preferably, polymeric and oligomeric flame retardant agents comprising aromatic polycarbonates containing units of tetrabromobisphenol-A, as see for example Wambach, U.S. Patent 3,833,685, and Fox, U.S. Patent 3,855,277, which patents are incorporated herein by reference. The flame retardant agents can be employed with synergists such as antimony compounds, for example antimony oxide and sodium antimonate.

The examples of the aliphatic diol which is employed to control the melt viscosity of the flame retarded polybutylene terephthalate are ethylene glycol, propylene glycol, 1,4-butanediol, 1,5-pentandiol and 1,6-hexanediol. 1,4-Butanediol is the preferred diol. In general, the amounts of the diol employed are trace amounts ranging from about 0.01 to about 0.50% by weight of the total composition of all the components. As the concentration of the diol is increased the melt viscosity of the flame retarded polybutylene terephthalate decreases. In general an amount of diol is employed which is effective to produce the desired decrease in the melt viscosity.

In practicing the process of the instant invention according to a preferred embodiment, the polybutylene terephthalate is intimately admixed or compounded with: (1) a flame retardant agent comprising a brominated aromatic polycarbonate, the preferred agent being a 50-50 weight percent tetrabromobisphenol-A, bisphenol-A copolycarbonate; Wambach, U.S. Patent No. 3,833,685; (2) a synergistic amount of an antimony compound, for example antimony oxide; (3) the aliphatic diol in trace amounts from about 0.01 to 0.50%; (4) optionally, stabilizing additives; and (5) fibrous (filamentous) glass. The components are put in an extrusion compounder to produce a blend in the form of pellets. The proportion of the PBT to the flame retardant agent can be varied from about 99 to about 80 parts by weight of PBT to about 1 to about 20 parts by weight of the flame retardant agent.

In a preferred embodiment, it is desirable that the flame retarded PBT compositions be reinforced with a fibrous (filamentous) glass filler. Another class of reinforcing fillers for use in the present invention is mineral fillers such as clay, mica, talc and the like, which can be included during the extrusion compounding of the PBT and the flame retardant in any amount sufficient to provide reinforcement. Other ingredients such as dyes, pigments, drip retardants, and the like can be added for their conventionally employed purpose.

Description of the Preferred Embodiments.- The following examples illustrate the invention. They are set forth as further description but are not to be construed as limiting the invention. Parts are by weight.

EXAMPLE 1

The flame retarded polybutylene terephthalate composition or blend employed in this and in Examples 2, 3, and 4 which follow, is prepared as follows: 48.7 parts of poly(1,4-butylene terephthalate) having a melt viscosity of 1200-2000 poises at 250°C, 15 parts of a brominated aromatic polycarbonate (50-50 weight percent of tetrabromobisphenol-A, bisphenol-A copolycarbonate; Wambach, U.S. Patent No. 3,833,685), 30 parts fibrous (filamentous) glass, 7 parts antimony oxide, and stabilizing additives are compounded and extruded at 530°F. in an extruder, and the extrudate is pelletized. The pellets now have a melt viscosity of 15,100 poises. The PBT employed is commercially available under the designation VALOX 295 from the General Electric Company.

99.95 parts of the above blend of ingredients and 0.05 parts of 1,4-butanediol are placed in a ribbon blender and physically blended. The resulting blend is extrusion compounded under the same conditions as before. The resulting composition now had a melt viscosity of 12,700 poises, as compared with 15,100 poises for the composition omitting the 1,4-butanediol, and a tensile strength of 17,300 psi as compared with 17,500 psi for the flame retarded PBT omitting the 1,4-butanediol.

EXAMPLE 2

The procedure of Example 1 is repeated except that 99.90 parts of the flame retarded PBT composition and 0.10 part of 1,4-butanediol are employed. The resultant blend has a melt viscosity of 9700 poises and a tensile strength of 17,100 psi.

EXAMPLE 3

The procedure of Example 1 is repeated except that 99.85 parts of the flame retarded PBT composition and 0.15 part of 1,4-butanediol are employed. The resulting blend has a melt viscosity of 7700 poises and a tensile strength of 16,900 psi.

EXAMPLE 4

The procedure of Example 1 is repeated except that 99.50 parts of the flame retarded polybutylene terephthalate and 0.50 parts of the 1,4-butanediol are employed. The resulting blend had a melt viscosity of 5200 poises and a tensile strength of 16,200 psi.

Control of the melt viscosity and the reduction thereof in the flame retarded polybutylene terephthalate by the addition of the aliphatic diol is clearly evident. Samples of the blends of Examples 1, 2, 3 and 4 were molded in a molding machine conventionally used for molding thermoplastic compositions, for example, a Van Dorn type injection molding machine. It was found that the products of these examples could be molded at $490^{\circ}F$, $480^{\circ}F$, $470^{\circ}F$, and $450^{\circ}F$ respectively, as compared to a temperature of $510^{\circ}F$ required for the flame retarded polybutylene terephthalate blend omitting the 1,4-butanediol. It is thus also clearly evident that the invention provides products which can be molded at lower extrusion temperatures.

The above patents and/or patent applications are incorporated herein by reference. Obviously, other modifications and variations of the present invention can be made in light of the above teachings. For example, unreinforced and/or unfilled compositions can be prepared. It is therefore to be understood that changes may be made in the particular embodiments described above which are within the scope of the invention as defined in the appended claims.

- 1 -    10116-8CV-3222

Claims:

1. A flame retarded polybutylene terephthalate composition which comprises trace amounts of an aliphatic diol sufficient to lower the melt viscosity of the composition, said polybutylene terephthalate being rendered flame retardant with a flame retarding agent comprising a brominated aromatic polycarbonate.

2. A composition as defined in Claim 1, wherein the aliphatic diol is 1,4-butanediol.

3. A composition as defined in Claim 1, which also includes a synergistic amount of antimony oxide.

4. A composition as defined in Claim 1, which also includes a small, effective reinforcing amount of a fibrous glass.

5. A composition as defined in Claim 1, wherein the flame retarding agent comprises an aromatic polycarbonate containing units of tetrabromobisphenol-A, and the aliphatic diol is 1,4-butanediol.

6. A composition as defined in Claim 5, in which the amount of 1,4-butanediol constitutes from about .01% to about 0.5% of the total composition.

0069297

7. A composition as defined in Claim 6, wherein the amount of 1,4-butanediol constitutes 0.05% of the total composition.

8. A composition as defined in Claim 6, wherein the amount of 1,4-butanediol constitutes 0.10% of the total composition.

9. A composition as defined in Claim 6, wherein the amount of 1,4-butanediol constitutes 0.15% of the total composition.

10. A composition as defined in Claim 6, wherein the amount of 1,4-butanediol is 0.50% of the total composition.

11. A process which comprises controlling the melt viscosity of a flame retarded polybutylene terephthalate composition which comprises adding therein trace amounts of aliphatic diol sufficient to lower the melt viscosity of the composition, said polybutylene terephthalate being rendered flame retardant with a flame retarding agent comprising a brominated aromatic polycarbonate.

12. A process as defined in Claim 11, wherein the aliphatic diol is 1,4-butanediol.

13. A process as defined in Claim 11, which also includes adding to the composition a synergistic amount of antimony oxide.

14. A process as defined in Claim 11, which also includes adding to the composition a small, effective reinforcing amount of a fibrous glass.

15. A process as defined in Claim 11, wherein the flame-retarding agent for the polybutylene terephthalate comprises an aromatic polycarbonate containing units of tetrabromobisphenol-A, and the aliphatic diol is 1,4-butanediol.

16. A process as defined in Claim 15, in which the amount of the 1,4-butanediol amounts to about .01% to about 0.5% of the total composition.

17. A process as defined in Claim 16, in which the amount of the 1,4-butanediol is 0.05% of the total composition.

18. A process as defined in Claim 16, in which the amount of the 1,4-butanediol is 0.10% of the total composition.

19. A process as defined in Claim 16, in which the amount of the 1,4-butanediol is 0.15% of the total composition.

20. A process as defined in Claim 16, in which the amount of the 1,4-butanediol is 0.5% of the total composition.

21. The molded composition obtained by molding the composition described in Claim 1.

22. The molded composition obtained by molding the composition described in Claim 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 855 277 (D.W.FOX)  *Example 4* ----- | 1,3,4, 5,13, 14,15 | C 08 L 67/02 |

**TECHNICAL FIELDS SEARCHED (Int. Cl. ³)**

C 08 L 67/02
C 08 L 67/00

The present search report has been drawn up for all claims

| Place of search | Date of completion of the search | Examiner |
|---|---|---|
| THE HAGUE | 11-10-1982 | DECOCKER L. |